# EUROPÄISCHE PATENTSCHRIFT

(11) **EP 0 770 285 B1**
(45) Veröffentlichungstag und Bekanntmachung des Hinweises auf die Patenterteilung: **26.08.1998**
(21) Anmeldenummer: 95923193.7
(22) Anmeldetag: 30.06.1995
(51) Int. Cl.: H04B 3/54

(54) **SPULENLOSER BUSANKOPPLER FÜR BORDNETZVERSORGUNG**
COILLESS BUS COUPLER FOR AN ON-BOARD POWER SUPPLY
COUPLEUR DE BUS SANS BOBINE POUR ALIMENTATION DE RESEAU DE BORD

(30) Priorität: 14.07.1994 DE 4424907
(43) Veröffentlichungstag der Anmeldung: 02.05.1997
(73) Patentinhaber: SIEMENS AKTIENGESELLSCHAFT, 80333 München (DE)
(72) Erfinder: ZIERHUT, Hermann, D-93073 Neutraubling (DE)
(86) Internationale Anmeldenummer: DE9500854
(87) Internationale Veröffentlichungsnummer: WO9602982

(56) Entgegenhaltungen:
- EP-A- 0 379 902
- WO-A-93/08652
- PATENT ABSTRACTS OF JAPAN vol. 16 no. 535 (E-1288) ,5.November 1992 & JP,A,04 200022 (MATSUSHITA ELECTR. IND. CO. LTD.) 21.Juli 1992,

## Beschreibung

Die Erfindung bezieht sich auf eine Einrichtung zum Bereitstellen der Bordnetzspannung bei einem Busankoppler ohne Übertrager, zum Ankoppeln an einem Information und Energie führenden Bus eines Bussystems, insbesondere der Gebäudesystemtechnik.

Im einzelnen wird auf den Gattungsbegriff von Anspruch 1 Bezug genommen. Ein derartiger Busankoppler ist aus der WO-A-9 308 652 bekannt. Dem bekannten Busankoppler liegt die Zielsetzung zugrunde, Reflexionen an einer nicht abgeschlossenen Leitung zu vermindern. Der bekannte Busankoppler arbeitet ohne Übertrager.

Es gibt Bussysteme der Gebäudesystemtechnik, beispielsweise das Bussystem der European Installation Bus Association, EIBA, bei denen aufgrund ihrer Betriebsart Reflexionen an der offenen Leitung vernachlässigbar sind.

Busankoppler sind bisher häufig mit Übertragern ausgeführt worden (EP-A-0 365 696, EP-A-0 379 902). Die Gleichspannung für die Bordnetzversorgung wird hierbei mit einem Übertrager und einem Kondensator, die als LC-Filter wirken, aus dem Bus gewonnen. Bei niederohmicem Gleichstromwiderstand der Induktivität des Übertragers wird für die Gleichstromgewinnung ein niedriger Widerstand bereitgestellt und für die wechselstrommäßige Belastung durch die Informationsübertragung ein hochohmiger induktiver Widerstand. Bei derartigen Ausführungen sind der Miniaturisierung und der Integration in IC-Schaltkreisen Grenzen gesetzt.

Der Erfindung liegt die Aufgabe zugrunde, eine Einrichtung zum Bereitstellen der Bordnetzspannung bei einem Busankoppler ohne Übertrager zum Ankoppeln an einem Information und Energie führenden Bus bereitzustellen, bei dem es unerheblich ist, ob Maßnahmen zur Verminderung der Reflexion erforderlich sind oder nicht.

Die Lösung der geschilderten Aufgabe erfolgt nach der Erfindung durch eine Einrichtung nach Patentanspruch 1. Ausgegangen wird hierbei von einer Ankoppelschaltung mit Steuereingang, die über den Steuereingang mit einer Ansteuerschaltung in Verbindung steht, wobei die Ansteuerschaltung Eingänge für ein Regelkriterium aufweist. Die Ankoppelschaltung ist derart aufgebaut und dimensioniert, daß sie in der Arbeitsweise einer Konstantstromquelle für die Frequenzen der Nachricht arbeitet und daß sie für niedrigere Frequenzen in Verbindung mit der Ansteuerschaltung als Regelschaltung arbeitet. Derartige niedrigere Frequenzen werden durch Energieverbrauch verursacht. Die Frequenzen der Nachricht können als Übertragungsgeschwindigkeit in Bit/Sekunden verstanden werden. So arbeitet beispielsweise der Bus der European Installation Bus Association, EIB-Bus, beispielsweise mit 9,6 kbit pro Sekunde, was einer Frequenz von 9,6 kHz entspricht. Die Ankoppelschaltung ist der Wirkung nach mit einem Speicherkondensator zum Abgreifen der Bordnetzspannung in Serie geschaltet. Die Serienschaltung ist der Wirkung nach an den Busleitern angeschlossen.

Indem die höchste Regelfrequenz tiefer als die niedrigste Übertragungsfrequenz eingestellt ist, stellt man sicher, daß der Widerstand der Ankoppelschaltung für die Bordnetzversorgung hinreichend niedrig ist und für die Nachrichtensignale ausreichend groß. Die Nachricht auf dem Bus wird dadurch durch die Bordnetzversorgung nicht bedämpft. Andererseits wird die Energie für die Bordnetzversorgung in besonders wirtschaftlicher weise verlustarm gewonnen. In der Praxis ist es vorteilhaft, die höchste Regelfrequenz tiefer als ein Zehntel der niedrigsten Übertragungsfrequenz einzustellen.

Ein derartiger Aufbau ermöglicht die Ausbildung in einem integrierten Schaltkreis, also in einem IC.

Die Ankoppelschaltung weist der Wirkung nach einen Transistor auf, dessen Emitter über einen Widerstand einen Pol der Ankoppelschaltung bildet, an dem auch ein Kondensator angeschlossen ist, der auf seiner anderen Seite an der als Steuereingang dienenden Basis des Transistors angeschlossen ist, dessen Kollektor den anderen Pol der Ankoppelschaltung bildet. Ein derartiger Aufbau ist besonders einfach und wirkungsvoll.

Die Ansteuerschaltung ist vorteilhaft mit ihren Eingängen an den beiden Polen der Ankoppelschaltung angeschlossen und derart geschaltet bzw. aufgebaut, daß der Spannungsfall der Ankoppelschaltung sich auf ein Mindestmaß einstellt. Hierdurch erzielt man eine Regelung auf minimalen Spannungsfall an der Ankoppelschaltung und dadurch höchsten Wirkungsgrad.

Die Ansteuerschaltung kann in unterschiedlicher Blickrichtung optimiert werden. Wenn man nicht auf besten Wirkungsgrad, sondern auf konstante Bordnetzspannung regeln möchte, ist eine Ansteuerschaltung nach Anspruch 4 vorteilhaft. Dabei sind die Eingänge der Ansteuerschaltung am Speicherkondensator angeschlossen und sie ist derart geschaltet bzw. aufgebaut, daß die am Speicherkondensator als Bordnetzspannung abzugreifende Spannung konstant gehalten wird.

Andererseits kann die Ansteuerschaltung für eine Regelung auf minimalen Stromverbrauch aus dem Bussystem und damit auf geringsten Leistungsverbrauch des Bussystems nach Anspruch 5 ausgelegt sein. Danach ist die Ansteuerschaltung mit ihren Eingängen in den Strompfad zur Bordnetzversorgung eingeschaltet. Sie ist derart geschaltet bzw. aufgebaut, daß die Ankoppelschaltung nur einen Strom in der Größenordnung aus dem Bus zieht, wie er für die Bordnetzversorgung jeweils benötigt ist.

Mit einer Weiterbildung nach Anspruch 6 ist es möglich, die Bordnetzspannung in der Größenordnung der mittleren Busspannung, also größer als die niedrigste Busspannung, zu gewinnen. Wenn man sich veranschaulicht, daß bei einem Energie und Information führenden Bus einem Gleichspannungspotential eine Nachricht als Wechselspannung überlagert ist, so sinkt die niedrigste Busspannung im Ausmaß der hinsichtlich des Gleichspannungspotentials negativen Informationsanteile. Durch eine Bypassschaltung nach Anspruch 6 wird es in der Betriebsphase der Konstantstromquelle ermöglicht, daß auch bei einer Bordnetzspannung, die zu bestimmten Betriebszeiten größer als die Busspannung ist, ein Strom über den Bypass abfließen kann, so daß die Konstantstromquelle weiter funktionsgerecht zu betreiben ist.

Bei einer Einrichtung nach Anspruch 6 ist in Reihe zur Ankoppelschaltung und in Überbrückung des Speicherkondensators eine Bypassschaltung vorgesehen, wobei im überbrückten Zweig in Serie zum Speicherkondensator ein richtungsabhängig sperrendes Ventil eingeschaltet ist. Dieses ist derart eingeschaltet, daß jeweils bei einer Spannung am Speicherkondensator, die höher ist als die Spannung an der Bypassschaltung das richtungsabhängig sperrende Ventil in seinem Sperrzustand ist. Unter einem richtungsabhängig sperrendem Ventil wird hierbei verstanden, daß es in einer Richtung sperrt und in der anderen Richtung durchlässig ist. Ein derartiges Ventil kann richtungsabhängig selbstsperrend sein, es kann gesteuert sein oder es kann auch ein geregeltes Ventil sein.

Das richtungsabhängig sperrende Ventil nach Anspruch 6 ist jeweils für eine Spannung am Speicherkondensator, die niedriger als die Spannung an der Bypassschaltung ist, in seinem leitenden Zustand. Der Bypass ist derart geschaltet bzw. aufgebaut, daß er jeweils bei einer Busspannung, die größer ist als die am Speicherkondensator abzunehmende Bordnetzspannung sperrend ist und bei einer Busspannung, die kleiner ist als die am Speicherkondensator abzunehmende Bordnetzspannung leitend ist. Der funktionsgerechte Betrieb in der Arbeitsphase Konstantstromquelle wird also durch ein richtungsabhängig sperrendes Ventil und eine Bypassschaltung auch dann erzielt, wenn die Bordnetzspannung in der Größenordnung der mittleren Busspannung gewonnen wird, die größer ist als die niedrigste Busspannung.

Die Bypassschaltung kann in an sich bekannter Weise mit einem Komparator aufgebaut werden. Durch eine Bypassschaltung nach Anspruch 7 kann ein derartiger Komparator in besonders einfacher und wirtschaftlicher Weise erübrigt werden. Eine derartige Bypassschaltung weist einen Transistor auf, dessen Basis an der zwischen Ansteuerschaltung und Ankoppelschaltung bestehenden Steuerleitung angeschlossen ist. Hierbei ist zwischen der Basis des Transistors der Ankoppelschaltung und der Basis des Transistors des Bypasses ein Spannungsfall bildendes Element, insbesondere eine Diode in Durchlaßrichtung, eingeschaltet. Eine Gleichspannungstransformation wird hierbei durch einen Flußspannungsfall am Spannungsfall bildenden Element ersetzt.

Ein Komparator in der Bypassschaltung wird auch in einer Einrichtung gemäß der Weiterbildung nach Anspruch 8 erübrigt. Hierbei weist der Transistor der Ankoppelschaltung einen Fühlkollektor auf (DE-A-4 316 608), der mit einem Transistor komplementären Typs, der die Bypassschaltung bildet, mit dessen Steuerelektrode bzw. Basis verbunden ist. Hierbei wird ein Komparator in besonders günstiger Weise erübrigt, wobei bei Integration in einem Chip Silizium gespart wird.

Die Erfindung soll nun anhand von in der Zeichnung grob schematisch wiedergegebenen Ausführungsbeispielen näher erläutert werden:

In FIG 1 ist eine Einrichtung zum Bereitstellen der Bordnetzspannung schematisch veranschaulicht, bei der im Regelungsbetrieb das Regelkriterium der Spannungsfall an der Konstantstromquelle ist. Es erfolgt hierbei eine Regelung auf minimalen Spannungsfall an der Ankoppelschaltung zur Erzielung größtmöglichen Wirkungsgrads.

In FIG 2 ist eine Einrichtung wiedergegeben, bei der im Regelungsbetrieb eine Regelung auf konstante Bordnetzspannung bzw. Betriebsspannung des Busankopplers erfolgt.

In FIG 3 ist eine Einrichtung dargestellt, bei der im Regelungsbetrieb eine Regelung auf minimalen Stromverbrauch und somit Leistungsverbrauch aus dem Bussystem erfolgt.

In FIG 4 ist eine Einrichtung wiedergegeben, die als Kombination einer Einrichtung nach FIG 2 und einer Einrichtung nach FIG 3 arbeitet. Regelkriterium ist hierbei die Bordnetzleistung bzw. Betriebsleistung.

In FIG 5 ist ein Ausführungsbeispiel für die Ankoppelschaltung nach den FIG 1 bis 4 dargestellt.

In FIG 6 ist ein Ausführungsbeispiel für eine Ansteuerschaltung für die Einrichtung nach FIG 1 oder nach FIG 2 wiedergegeben.

In FIG 7 ist eine Weiterbildung mit Bypass zur Einrichtung nach FIG 1 dargestellt.

In FIG 8 ist eine Konstantstromquelle mit Bypass und Ansteuerung hierfür wiedergegeben.

In FIG 9 ist eine Weiterbildung zur Einrichtung nach FIG 2 und bei vorgesehenem Bypass anhand eines besonders günstigen Ausführungsbeispiels veranschaulicht.

In FIG 10 ist eine Weiterbildung zur Einrichtung nach FIG 2 und bei vorgesehenem Bypass anhand eines weiteren besonders vorteilhaften Ausführungsbeispiels veranschaulicht.

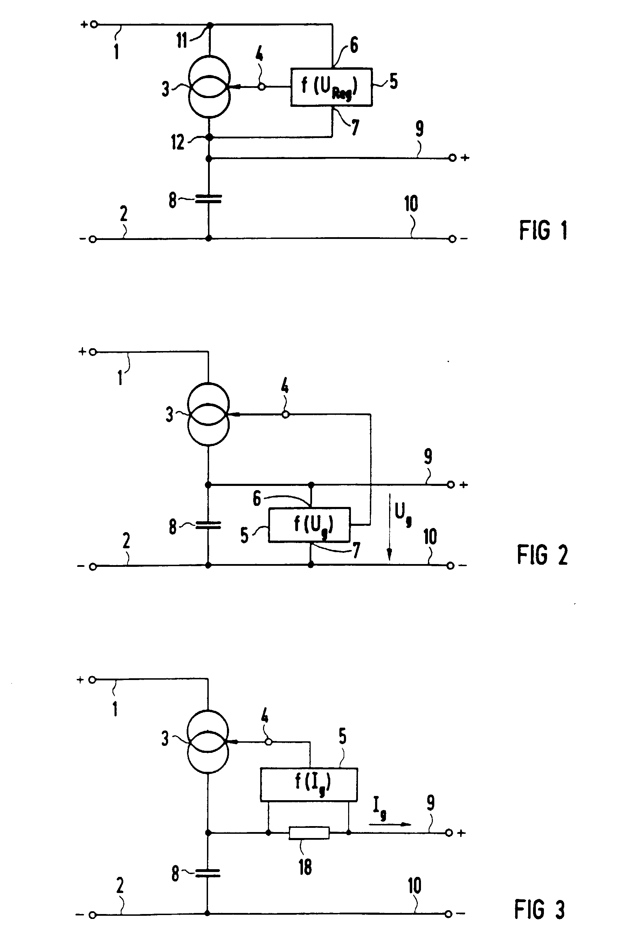

Die Einrichtung zum Bereitstellen der Bordnetzspannung bei einem Busankoppler ohne Übertrager, nach FIG 1, ist an einem Bus mit den Busleitern 1, 2 angeschlossen. Beispielsweise führt der obere Bus positives Potential und der untere Bus negatives Potential bzw. Erde. Die Einrichtung weist eine Ankoppelschaltung 3 auf, die mit ihrem Steuereingang 4 mit einer Ansteuerschaltung 5 in Verbindung steht. Die Ansteuerschaltung 5 weist Eingänge 6, 7 für ein Regelkriterium auf. Die Ankoppelschaltung 3 ist derart aufgebaut und dimensioniert, daß sie in der Arbeitsweise einer Konstantstromquelle bei Frequenzen der Nachricht zu betreiben ist. Die Frequenzen der Nachricht sind als überlagerte Wechselsignale auf einem Gleichspannungspotential des Busses übertragen. Für niedrige Frequenzen arbeitet die Ankoppelschaltung 3 in Verbindung mit der Ansteuerschaltung 5 als Regelschaltung. Die Ankoppelschaltung 3 ist zumindest der Wirkung nach mit einem Speicherkondensator 8 verbunden, an dem die Bordnetzspannung als Gleichspannung an den Versorgungsschienen 9 und 10 abgenommen werden kann. Die Serienschaltung aus Ankoppelschaltung 3 und Speicherkondensator 8 ist der Wirkung nach an den Busleitern 1 und 2 angeschlossen. Über die Versorgungsschienen 9 und 10 kann einem Busankoppler die Bordnetzspannung zugeführt werden. Die Einrichtung zum Bereitstellen der Bordnetzspannunng kann Teil des Busankopplers sein. Die Energie für die Bordnetzversorgung wird in besonders wirtschaftlicher Weise verlustarm gewonnen.

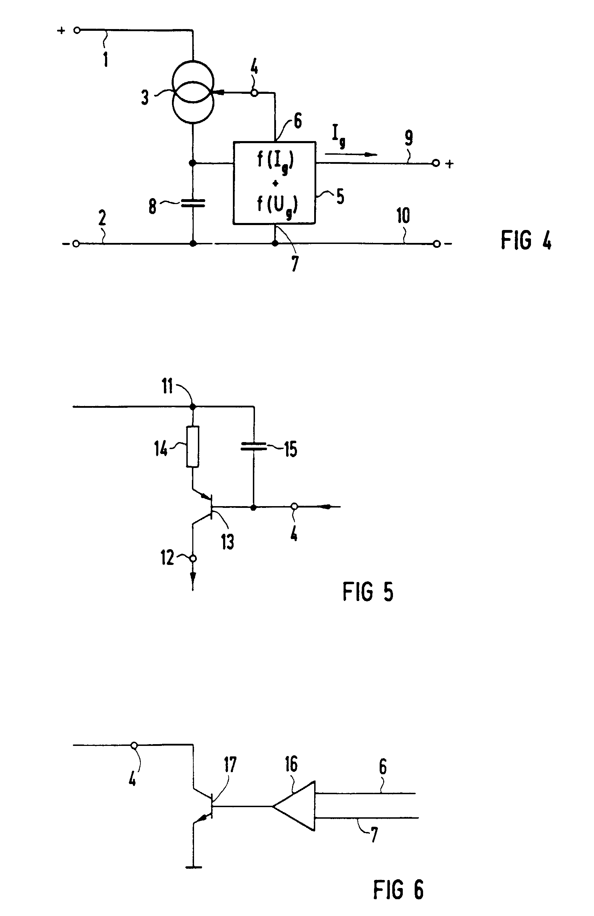

Die Ankoppelschaltung ist wie in der FIG 5 aufgebaut. Die Ankoppelschaltung weist danach zumindest der Wirkung nach einen Transistor 13 auf, dessen Emitter über einen Widerstand 14 einen Pol 11 der Ankoppelschaltung bildet. Am Pol 11 ist auch ein Kondensator 15 angeschlossen, der auf seiner anderen Seite an der als Steuereingang dienenden Basis des Transistors 13 angeschlossen ist. Der Kollektor des Transistors 13 bildet den anderen Pol 12 der Ankoppelschaltung. Bei großen Strömen kann der Widerstand 14 so klein werden, daß bereits der innere Emitterwiderstand des Transistors ausreicht und sich deshalb ein zusätzlicher externer Widerstand erübrigt, er also eingespart werden kann.

Die Ansteuerschaltung 5, die an beiden Polen 11, 12 der Ankoppelschaltung 3 angeschlossen ist, kann im Prinzip nach FIG 6 aufgebaut sein. Die Eingänge 6, 7 der Ansteuerschaltung für ein Regelkriterium führen zu einem Komparator 16, dessen Ausgang mit der Basis eines Transistors der Ansteuerschaltung verbunden ist. Beispielsweise bildet der Kollektor den Ausgang, der auf den Steuereingang der Ankoppelschaltung arbeitet. Der Emitter ist beispielsweise an Bezugsmasse angeschlossen.

Die Leitkonstante der Ankoppelschaltung 3 nach FIG 5 ergibt sich als Produkt der Verstärkung B des Transistors 13, des Widerstands 14 und der Kapazität des Kondensators 15 als Thau = B x R x C. Die Ankoppelschaltung wirkt bei hohen Frequenzen, wie sie eine Nachricht aufweist, als Konstantstromquelle mit der Zeitkonstanten Thau.

Der andere Pol 12 der Ankoppelschaltung bildet den Ausgang der Konstantstromquelle. Und der Pol 11 den Eingang.

Bei einer Ausführung nach FIG 2, bei der Regelkriterium die Bordnetzspannung bzw. Betriebsspannung am Speicherkondensator 8 ist, können Ankoppelschaltung 3 und Ansteuerschaltung 5 gemäß den Ausführungsbeispielen nach FIG 5 und FIG 6 aufgebaut sein.
Nach den geschilderten Prinzipien kann mit einer Ausführung nach FIG 3, bei der Regelkriterium der Bordnetzstrom bzw. Betriebsstrom ist, die Ankoppelschaltung 3 und eine Ansteuerschaltung 5 so ausgeführt sein, wie es in den FIG 5 und 6 veranschaulicht ist. An einem Meßwiderstand 18 können hierbei die Eingänge 6 und 7 der Ansteuerschaltung anliegen, wobei der Bordnetzstrom durch den Meßwiderstand 18 als eine Eingangsspannung für die Ansteuerschaltung umgesetzt wird.

Eine Ausführung nach FIG 4 kann als Kombination der Prinzipien nach FIG 2 und FIG 3 verstanden werden.

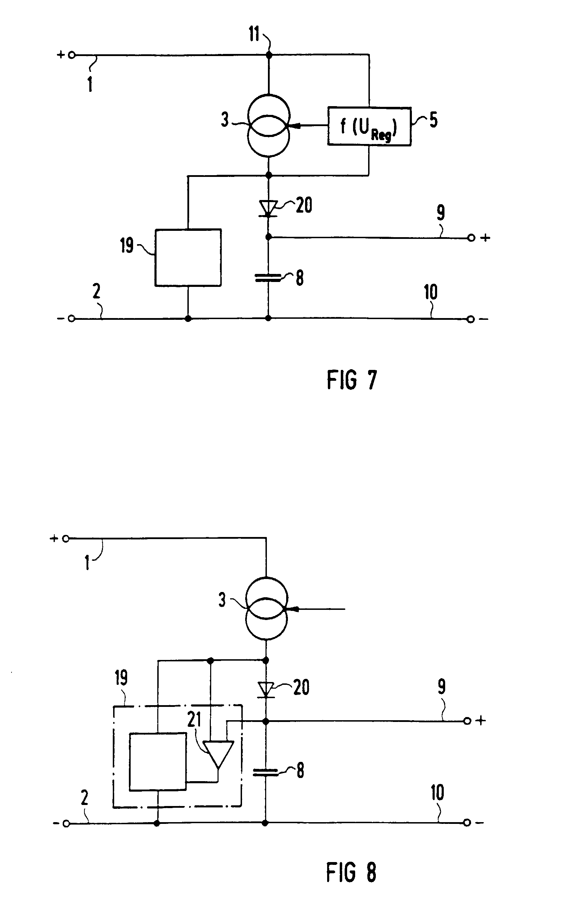

Bei der Einrichtung nach FIG 7 ist eine Einrichtung nach FIG 1 eine Bypassschaltung 19 und ein richtungsabhängig sperrendes Ventil 20 in der wiedergegebenen Weise vorgesehen. Verständlicherweise können konkrete Bauelemente nach den Ausführungsbeispielen auch nur der Wirkung nach in einem integrierten Schaltkreis realisiert sein. Verständlicherweise sind sämtliche Schaltungen nach den wiedergegebenen Figuren so zu verstehen.

In Reihe zur Ankoppelschaltung 3 ist in Überbrückung des Speicherkondensators 8 die Bypassschaltung 19 vorgesehen. Hierbei ist im überbrückten Zweig in Serie zum Speicherkondensator 8 ein richtungsabhängig sperrendes Ventil 20 derart eingeschaltet, daß jeweils bei einer Spannung am Speicherkondensator 8, die höher ist als die Spannung an der Bypassschaltung 19, das richtungsabhängig sperrende Ventil 20 in seinem Sperrzustand. Andererseits ist für eine Spannung am Speicherkondensator 8, die niedriger als die Spannung an der Bypassschaltung 19 ist, das richtungsabhängig sperrende Ventil 20 in seinem leitenden Zustand. Die Bypassschaltung 19 ist derart geschaltet bzw. aufgebaut, daß sie jeweils bei einer Busspannung zwischen den Busleitern 1, 2, die größer ist als die am Speicherkondensator 8 abzunehmende Bordnetzspannung, sperrend ist. Bei einer Busspannung, die kleiner ist, als die am Speicherkondensator 8 abzunehmende Bordnetzspannung, ist die Bypassschaltung leitend. Die dann als Konstantstromquelle betriebene Ankoppelschaltung 3 kann dann den Strom über die Bypassschaltung führen und ihre Funktion als Konstantstromquelle aufrechterhalten.

Das richtungsabhängig sperrende Ventil kann richtungsabhängig selbstsperrend, als gesteuertes Ventil oder als geregeltes Ventil ausgeführt sein.

Für die Betriebszeit der Ankoppelschaltung 3 als Konstantstromquelle wird also bei einer Schaltung nach FIG 7 der Strom als Ladestrom über das richtungsabhängig sperrende Ventil 20 zum Speicherkondensator 8 geführt, wenn die Busspannung größer als die Spannung am Speicherkondensator ist. Wenn infolge der überlagerten Nachricht die Busspannung unter den Wert der Spannung am Speicherkondensator 8 absinkt, wird eine Entladung des Speicherkondensators über das richtungsabhängige Ventil 20 verhindert und der Strom der Konstantstromquelle über die Bypassschaltung 19 geführt. In den anderen Betriebszeiten wirkt die Ankoppelschaltung 3 in Verbindung mit der Ansteuerschaltung 5 wieder als Regelschaltung. Im Ausführungsbeispiel ist das Regelkriterium der Spannungsfall an der Konstantstromquelle, der auf einen minimalen Spannungsfall eingeregelt wird. Wenn die geschilderten Schaltungen mit einer Bypassschaltung versehen werden, kann also dem Bussystem eine höhere Bordnetzspannnung als ohne Bypassschaltung entnommen werden. Eine höhere Bordnetzspannung hat andererseits die allgemein bekannten Vorteile.

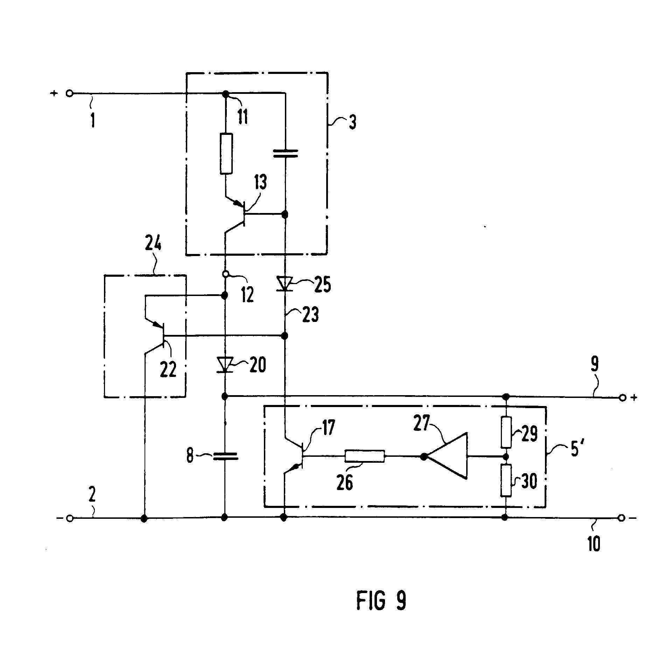

Die mit Bypassschaltung 19 versehene Anordnung nach FIG 8 wird durch einen Komparator 21 angesteuert. Die Schaltung nach FIG 8 ist durch eine Ansteuerschaltung 5 nach einer der FIG 1 bis 3 und beispielsweise jeweils nach FIG 6 ergänzt vorzustellen. Die Schaltung nach FIG 9 gibt ein Schaltungsprinzip wider, das eine Schaltung nach FIG 2 mit einer Bypassfunktion versieht und zur Integration in einem integrierten Schaltkreis besonders geeignet ist. Hierbei erübrigt sich ein Komparator 21 nach FIG 8 zum Ansteuern der Bypassfunktion. Die Bypassschaltung ist als Bypass 24 ausgeführt, der einen Transistor 22 aufweist, dessen Basis an der zwischen Ansteuerschaltung 5' und Ankoppelschaltung 3 bestehenden Steuerleitung 23 angeschlossen ist. Hierbei ist zwischen der Basis des Transistors 13 der Ankoppelschaltung 3 und der Basis des Transistors 22 des Bypasses 24 ein Spannungsfall bildendes Element 25, insbesondere eine Diode in Durchlaßrichtung, eingeschaltet. Der Spannungsfall am Spannungsfall bildenden Element 25 sorgt dafür, daß der Strom der Ankoppelschaltung 3 in der Betriebsphase als Konstantstromquelle so lange den Speicherkondensator 8 lädt, wie die Spannung am Speicherkondensator 8 und damit die Bordnetzspannung an den Versorgungsschienen 9 und 10 kleiner ist als die Spannung zwischen den Busleitern 1 und 2. Für Betriebszuständen, bei denen die Spannung am Speicherkondensator 8 größer ist als zwischen den Busleitern 1 und 2, sorgt die Spannung am Spannungsfall bildenden Element 25 dafür, daß der Kondensator 22 des Bypasses 24 leitend gesteuert wird und somit auch ein Konstantstrom weiterfließen kann.

In der Ansteuerschaltung 5' ist an der Basis des Transistors 17 ein Widerstand 26 und ein invertierender Verstärker 27 in Reihe angeschlossen, wobei der Eingang des invertierenden Verstärkers 27 zwischen zwei spannungsteilenden Widerständen 28 zwischen den Versorgungsschienen 9 und 10 angeschlossen ist. Wenn die Bordnetzspannung zwischen den Versorgungsschienen 9 und 10 kleiner wird, nimmt der Eingang des invertierenden Verstärkers 27 im Ausführungsbeispiel ein negativeres Potential an, so daß an seinem Ausgang eine verstärkte positive Spannung ansteht, die an der Basis des Transistors 17 als positives Potential ansteht und über Kollektor und Emitter einen kleineren Stromfluß bewirkt, so daß negativeres Potential an der Basis des Transistors 13 der Ankoppelschaltung ansteht, die bei einem PNP-Transistor dazu führt, daß er über Emitter und Kollektor einen größeren Strom führt, der den Speicherkondensator 8 lädt, so daß zwischen den Versorgungsschienen 9 und 10 wieder höhere Spannung ansteht. Die Betriebsphase der Konstantstromquelle entspricht der schon zuvor beschriebenen Betriebsweise.

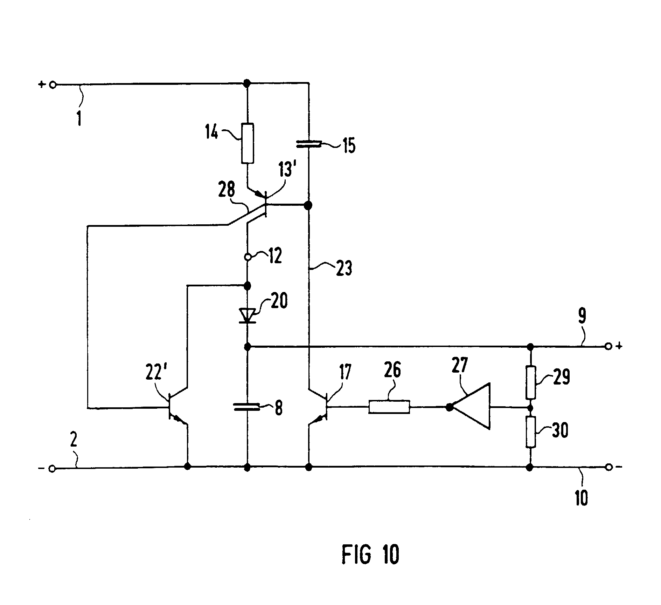

In FIG 10 ist eine Weiterbildung veranschaulicht, wobei sich der Komparator 21 nach FIG 8 auch erübrigt. Im Vergleich zur Ausführung nach FIG 9 kommt man hier auch ohne Spannungsfall bildendes Element 25 aus, wobei der Transistor 22 für die Bypassfunktion von einem als Fühlkollektor ausgeführten Transistor 13' der Ankoppelschaltung 3 angesteuert wird. Der Aufbau eines Transistors mit Fühlkollektor ist in DE-A-4 316 608 beschrieben worden. Ein derartiger Transistor weist einen weiteren Kollektor, den Fühlkollektor auf, der den Sättigungsbeginn als Unterschreiten einer Spannungsdifferenz erkennt. Wenn ein derartiger Transistor an seiner Basis mit einem Konstantstrom angesteuert wird, hier also in der Betriebsphase der Ankoppelschaltung als Konstantstromquelle, fließt vom Emitter zum Fühlkollektor ein Strom und solange der Transistor nicht im Sättigungsbereich ist, bleibt der Fühlkollektor stromlos. Wenn der Transistor bezüglich des Hauptkollektors in Sättigung ist, nimmt der Fühlkollektor physikalisch gesehen überschüssige Löcher auf. Der mit dem Fühlkollektor gebildete Transistor ist in Sättigung, wenn die Emitter-Kollektor-Spannung sehr klein ist. Der Stromfluß im Fühlkollektor ist also ein Anzeichen dafür, daß eine entsprechend geringe Spannungsdifferenz zwischen Kollektor und Emitter vorliegt. Der Sättigungszustand wirkt sich allgemein dahingehend aus, daß ein weiteres Ansteigen des Steuerstroms keinen Zuwachs des Kollektorstroms bewirken kann.

Bei der Ausführung nach FIG 10 wird die Ankoppelschaltung gebildet aus den Elementen Kondensator 15, Widerstand 14 und dem Transistor mit Fühlkollektor 13'. Der Transistor 13' mit Kollektor 28 dient zugleich der Ansteuerung des Transistors 22 für die Bypassfunktion. Den Ladeabfluß des Speicherkondensators 8 verhindert wieder ein richtungsabhängig sperrendes Ventil 20. Im Vergleich zur Schaltung nach FIG 9 werden die Funktionen des Spannungsfall bildenden Elements 25 durch den Transistor 13' mit Fühlkollektor 28 übernommen. Im übrigen sind gleiche Bauteile wie bei der Einrichtung nach FIG 9 mit gleichen Bezugszeichen versehen. Bei der Schaltung nach FIG 10 wird in der Betriebsphase der Ankoppelschaltung als Konstantstromquelle bei zusammenbrechender Spannung zwischen Emitter und Kollektor des Transistors 13' mit Fühlkollektor infolge des Absinkens der Busspannung im Vergleich zur Bordnetzspannung zwischen den Versorgungsschienen 9, 10 vom Fühlkollektor wegen des eintretenden Sättigungszustandes vom Fühlkollektor 28 Strom gezogen, der den Transistor 22' für die Bypassfunktion dann leitend steuert, so daß die Bedingung für den Betriebszustand mit Konstantstromquelle sichergestellt ist. Der Transistor 22' nach FIG 10 unterscheidet sich vom Transistor 22 nach FIG 9 nur durch seine Dotierung als pnp bzw. als npn-Transistor.

Wesentlich ist jeweils der gleitende Übergang zwischen einer Betriebsphase mit Konstantstromquelle und einer Betriebsphase mit der Funktion Regelschaltung. Die Konstantstromquelle ist für hohe Frequenzen, wie sie Nachrichten darstellen, gegeben und die Betriebsphase Regelschaltung für niedrige Frequenzen, wie sie durch Stromentnahme im Bordnetz zustande kommen. Wesentlich ist, daß nach dem erfindungsgemäßen Prinzip sich Schaltungen realisieren lassen, die für eine Integration in einem integrierten Schaltkreis besonders günstig sind. Die veranschaulichten diskreten Bauelemente können auch nur der Wirkung nach bzw. ihrer Funktion nach in an sich bekannter Weise im integrierten Schaltkreis ausgeführt sein. Auch die Schaltungsverbindungen können verständlicherweise in der Technologie der integrierten Schaltkreise realisiert sein. Insbesondere die Schaltungen nach den FIG 9 und 10 können besonders materialsparend in einem integrierten Schaltkreis ausgeführt werden. Darüber hinaus können die bipolaren Transistoren durch Feldeffekttransistoren ersetzt werden.

## Patentansprüche

1. Einrichtung zum Bereitstellen der Bordnetzspannung bei einem Busankoppler ohne Übertrager, zum Ankoppeln an einen Information und Energie führenden Bus eines Bussystems, insbesondere der Gebäudesystemtechnik, wobei eine Ankoppelschaltung (3) mit Steuereingang (4) hierüber mit einer Ansteuerschaltung (5) in Verbindung steht, die Eingänge (6, 7) für ein Regelkriterium aufweist, wobei die Ankoppelschaltung (3) derart aufgebaut und dimensioniert ist, daß sie in der Arbeitsweise einer Konstantstromquelle für Frequenzen der Nachricht arbeitet und für niedrigere Frequenzen in Verbindung mit der Ansteuerschaltung (5) als Regelschaltung arbeitet, wobei die Ankoppelschaltung (3) der Wirkung nach mit einem Speicherkondensator (8) zum Abgreifen der Bordnetzspannung in Serie geschaltet ist und die Serienschaltung der Wirkung nach an den Busleitern (1, 2) des Busses angeschlossen ist,
**dadurch gekennzeichnet,**
daß die Ankoppelschaltung (3) einen Transistor (13) aufweist, dessen Emitter über einen Widerstand (14) einen Pol (11) der Ankoppelschaltung bildet, an dem auch ein Kondensator (15) angeschlossen ist, der auf seiner anderen Seite an der als Steuereingang (4) dienenden Basis des Transistors (13) angeschlossen ist, dessen Kollektor den anderen Pol (12) der Ankoppelschaltung bildet.

2. Einrichtung nach Anspruch 1,
**dadurch gekennzeichnet,**
daß die Ansteuerschaltung (5) mit ihren Eingängen (6, 7) an den beiden Polen (11, 12) der Ankoppelschaltung (3) angeschlossen ist und derart geschaltet bzw. aufgebaut ist, daß der Spannungsfall der Ankoppelschaltung sich auf ein Mindestmaß einstellt.

3. Einrichtung nach Anspruch 1,
**dadurch gekennzeichnet,**
daß die Ansteuerschaltung (5, 5') mit ihren Eingängen am Speicherkondensator (8) angeschlossen ist und derart geschaltet bzw. aufgebaut ist, daß die am Speicherkondensator (8) als Bordnetzspannung abzugreifende Spannung konstant gehalten wird.

4. Einrichtung nach Anspruch 1 oder einem der Ansprüche 2 bis 3, **dadurch gekennzeichnet,**
daß in Reihe zur Ankoppelschaltung (3) und in Überbrückung des Speicherkondensators (8) eine Bypassschaltung (19, 24) vorgesehen ist, wobei im überbrückten Zweig in Serie zum Speicherkondensator (8) ein richtungsabhängig sperrendes Ventil (20) derart eingeschaltet ist, daß jeweils bei einer Spannung am Speicherkondensator (8), die höher ist als die Spannung an der Bypassschaltung (19, 24) das richtungsabhängig sperrende Ventil (20) in seinem Sperrzustand ist, wobei jeweils für eine Spannung am Speicherkondensator (8), die niedriger ist als die Spannung an der Bypassschaltung (19, 24) ist, das richtungsabhängig sperrende Ventil (20) Leitend ist, wobei weiter die Bypassschaltung (19) derart geschaltet bzw. aufgebaut ist, daß sie jeweils bei einer Busspannung, die größer ist als die am Speicherkondensator (8) abzunehmende Bordnetzspannung, sperrend ist und bei einer Busspannung, die kleiner ist als die am Speicherkondensator (8) abzunehmende Bordnetzspannung, leitend ist.

5. Einrichtung nach den Ansprüchen 1,3, und 4,
**dadurch gekennzeichnet,**
daß die Bypassschaltung (19) als Bypass (24) ausgeführt ist, der einen Transistor (22) aufweist, dessen Basis an der zwischen Ansteuerschaltung (5') und Ankoppelschaltung (3) bestehenden Steuerleitung (23) angeschlossen ist, wobei zwischen der Basis des Transistors (13) der Ankoppelschaltung (3) und der Basis des Transistors (22) des Bypasses (24) ein spannungsfallbildendes Element (25), insbesondere eine Diode in Durchlaßrichtung, eingeschaltet ist.

6. Einrichtung nach den Ansprüchen 1,3 und 4,
**dadurch gekennzeichnet,**
daß der Transistor (13') der Ankoppelschaltung (3) einen Fühlkollektor (28) aufweist, der mit dem Steuereingang einer Bypassschaltung verbunden ist, wobei die Bypassschaltung insbesondere aus einem Transistor (22') komplementären Typs gebildet ist.

## Claims

1. Device for providing the vehicle power supply voltage for a bus coupler without a transformer, for coupling to a bus, which carries information and power, of a bus system, in particular for building system technology, a coupling circuit (3) being connected via the control input (4) to a drive circuit (5) which has inputs (6, 7) for a control criterion, the coupling circuit (3) being constructed and designed in such a manner that it operates in the manner of a constant current source for the information frequencies and operates as a control circuit, in conjunction with the drive circuit (5), for lower frequencies, the coupling circuit (3) being operatively connected in series with an energy storage capacitor (8) for picking off the vehicle power supply voltage, and the series circuit being operatively connected to the bus conductors (1,2) of the bus,
characterized
in that the coupling circuit (3) has a transistor (13) whose emitter forms, via a resistor (14), one pole (11) of the coupling circuit, to which pole (11) a capacitor (15) is also connected, which capacitor (15) is connected on its other side to the base, which is used as a control input (4), of the transistor (13), whose collector forms the other pole (12) of the coupling circuit.

2. Device according to Claim 1,
characterized
in that the drive circuit (5) is connected by its inputs (6, 7) to the two poles (11, 12) of the coupling circuit (3) and is wired up and constructed in such a manner that the voltage drop on the coupling circuit is a minimum.

3. Device according to Claim 1,
characterized
in that the drive circuit (5, 5') is connected by its inputs to the energy storage capacitor (8), and is wired up and constructed in such a manner that the voltage which can be picked off the energy storage capacitor (8) as the vehicle power supply voltage is kept constant.

4. Device according to Claim 1 or one of Claims 2 to 3, characterized
in that a bypass circuit (19, 24) is provided in series with the coupling circuit (3) and bridging the energy storage capacitor (8), an active device (20), which switches off as a function of direction, being connected in the bridged path in series with the energy storage capacitor (8), in such a manner that the active device (20) which switches off as a function of direction is in each case in its switched-off state when the voltage on the energy storage capacitor (8) is higher than the voltage on the bypass circuit (19, 24), the active device (20) which switches off as a function of direction in each case being switched on when the voltage on the energy storage capacitor (8) is lower than the voltage on the bypass circuit (19, 24), the bypass circuit (19) furthermore being wired up and constructed in such a manner that it is in each case switched off when the bus voltage is higher than the vehicle power supply voltage which can be picked off the energy storage capacitor (8), and is switched on when the bus voltage is lower than the vehicle power supply voltage which can be picked off on the energy storage capacitor (8).

5. Device according to Claims 1, 3, and 4,
characterized
in that the bypass circuit (19) is designed as a bypass (24) which has a transistor (22) whose base is connected to the control line (23) which exists between the drive circuit (5') and the coupling circuit (3), an element (25) which forms a voltage drop, in particular a diode in the forward direction, being connected between the base of the transistor (13) of the coupling circuit (3) and the base of the transistor (22) of the bypass (24).

6. Device according to Claims 1, 3, and 4,
characterized
in that the transistor (13') of the coupling circuit (3) has a sensing collector (28) which is connected to the control input of a bypass circuit, the bypass circuit being formed, in particular, from a transistor (22') of a complementary type.

## Revendications

1. Dispositif pour fournir la tension de réseau de bord dans un coupleur de bus sans transformateur, en vue du couplage à un bus, conduisant des informations et de l'énergie, d'un système de bus, notamment en domotique, un circuit de couplage (3) étant relié par une entrée de commande (4) à un circuit de commande (5) qui comporte des entrées (6, 7) pour un critère de régulation, le circuit de couplage (3) étant conçu et dimensionné de manière à fonctionner comme une source de courant constant pour des fréquences de l'information et à fonctionner en relation avec le circuit de commande (5) comme un circuit de régulation pour des fréquences plus petites, le circuit de couplage (3) étant branché quant à son action en série avec un condensateur de stockage (8) pour prélever la tension du réseau de bord et le circuit série étant raccordé quant à son action aux lignes (1, 2) du bus,
caractérisé par le fait que
le circuit de couplage (3) comporte un transistor (13) dont l'émetteur forme par l'intermédiaire d'une résistance (14) un pôle (11) du circuit de couplage, résistance à laquelle est aussi raccordé un condensateur (15) qui est raccordé de l'autre côté à la base, servant d'entrée de commande (4), du transistor (13) dont le collecteur forme l'autre pôle (12) du circuit de couplage.

2. Dispositif selon la revendication 1,
caractérisé par le fait que
le circuit de commande (5) est raccordé par ses entrées (6, 7) aux deux pôles (11, 12) du circuit de couplage (3) et est conçu et dimensionné de telle sorte que la chute de tension du circuit de couplage se règle sur un minimum.

3. Dispositif selon la revendication 1,
caractérisé par le fait que
le circuit de commande (5, 5') est raccordé par ses entrées au condensateur de stockage (8) et est conçu et dimensionné de telle sorte que la tension à prélever au condensateur de stockage (8) comme tension du réseau de bord est maintenue constante.

4. Dispositif selon la revendication 1 ou selon l'une des revendications 2 à 3,
caractérisé par le fait que
il est prévu un circuit de dérivation (19, 24) qui est branché en série avec le circuit de couplage (3) et qui court-circuite le condensateur de stockage (8), une soupape (20) bloquante en fonction du sens du courant étant branchée en série avec le condensateur de stockage (8) dans la branche court-circuitée de manière à être dans son état bloquant à chaque fois que la tension au condensateur de stockage (8) est supérieure à la tension au circuit de dérivation (19, 24) et à être dans son état passant à chaque fois que la tension au condensateur de stockage (8) est inférieure à la tension au circuit de dérivation (19, 24), le circuit de dérivation (19) étant branché et conçu de manière à être bloquant à chaque fois que la tension de bus est supérieure à la tension du réseau de bord à prélever au condensateur de stockage (8) et à être passant à chaque fois que la tension de bus est inférieure à la tension du réseau de bord à prélever au condensateur de stockage (8).

5. Dispositif selon les revendications 1, 3 et 4,
caractérisé par le fait que
le circuit de dérivation (19) est mis en oeuvre sous forme de dérivation (24) qui comporte un transistor (22) dont la base est raccordée à la ligne de commande (23) existant entre le circuit de commande (5') et le circuit de couplage (3), un élément (25) créant une chute de tension, notamment une diode en sens passant, étant branché entre la base du transistor (13) du circuit de couplage (3) et la base du transistor (22) de la dérivation (24).

6. Dispositif selon les revendications 1, 3 et 4,
caractérisé par le fait que
le transistor (13') du circuit de couplage (3) comporte un collecteur détecteur (28) qui est relié à l'entrée de commande d'un circuit de dérivation, le circuit de dérivation étant formé notamment d'un transistor (22') du type complémentaire.
